# EUROPEAN PATENT APPLICATION

(11) **EP 3 081 085 A1**
(43) Date of publication of application: **19.10.2016**
(21) Application number: 15163441.7
(22) Date of filing: 14.04.2015
(51) Int. Cl.: A01N 43/40, A01N 47/40, A01N 51/00, A01P 3/00, A01P 5/00, A01P 7/04

(54) **METHOD FOR IMPROVING EARLINESS IN COTTON**

(71) Applicant: Bayer CropScience AG, 40789 Monheim am Rhein (DE); Bayer CropScience LP, Research Triangle Park, NC 27709 (US)
(72) Inventor: The designation of the inventor has not yet been filed
(74) Representative: BIP Patents

(57) **Abstract**

The invention relates to methods and combinations of Fluopyram, optionally in combination with at least one insecticide, in particular a nicotinic acetylcholine receptor (nAChR) agonist for improving earliness in cotton, wherein Fluopyram, optionally in combination with at least one insecticide, in particular at least one nicotinic acetylcholine receptor (nAChR) agonist is applied to the cotton plants, plant parts thereof, plant propagation material or the soil which the plants are grown or intended to be grown in an effective amount.

## Description

The invention relates to methods and combinations of Fluopyram, optionally in combination with at least one insecticide, in particular a nicotinic acetylcholine receptor (nAChR) agonist for improving earliness in cotton, wherein Fluopyram, optionally in combination with at least one insecticide, in particular a nicotinic acetylcholine receptor (nAChR) agonist is applied to the cotton plants, plant parts thereof, plant propagation material or the soil which the plants are grown or intended to be grown in an effective amount.

Earliness in cotton describes the objective in cotton breeding to result in a cotton plant delivering mature bolls in the shortest time possible. Different parameters have been used to describe this important feature in cotton. Node number of first fruiting branch is one morphological character that can be used to indicate earliness of maturity (Low et al., Cotton Growth Review 1969, (40), pages 181-188; Munro et al, Cotton Growth Review 1971, (48), pages 28-41). Node number can be determined early in the season, it can be easily and precisely identified, and it is independent of complications arising from shedding of fruit forms. When considered in terms of rate of fruit development and maturity, earliness may be defined as the extent to which squaring, flowering, and boll opening occur relative to time of planting (Richmond & Radwan, CropScience 1962, (2), pages 397 - 400). This definition does not take into account the amount of seed cotton produced, but it involves phenological events that are readily observable and measurable. Several other parameters have been used as indicators or estimators of earliness, including rates of blooming and maturation, vertical and horizontal flowering intervals, vertical and horizontal flowering intervals, mean maturity, production rate index, and portion of crop harvested by specified dates.

Earliness is further influenced by genetic factors. Short season varieties differ in earliness when compared to full season varieties. Also morphology for a variety influences the maturity and thereby impacting earliness.

Enviromental factors like soil moisture, draught stress, temperature, pest pressure and light intensity influence earliness as well. Currently several approaches are followed to improve earliness like irrigation, Pix application, nitrogen fertilization and insect management.

Aldicarb, a systemic insecticide has been described to also have an effect on cotton growth and development in addition depending on temperature (Reddy et al, Environmental and Experimental Botany 38 (1997), 39 - 48).

Fluopyram (N-[2-[3-chloro-5-(trifluoromethyl)-2-pyridinyl]ethyl]-2-(trifluoromethyl)benzamide) has been described as a compound having both fungicidal (WO-A 2004/16088) and nematicidal activity. The production process for Fluopyram is also described in WO-A 2004/16088.

Fluopyram is a compound of the formula (I) 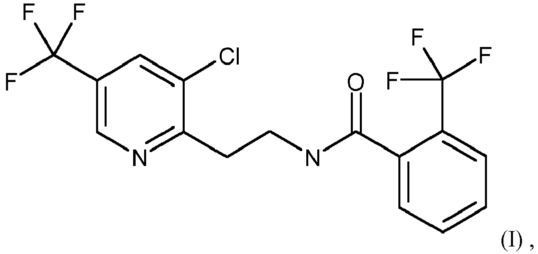 also known as *N-*{2-[3-chloro-5-(trifluoromethyl)-2-pyridyl]ethyl}-α,α,α-trifluoro-ortho-toluamide or *N-*[2-[3-chloro-5-(trifluoromethyl)-2-pyridinyl]ethyl]-2-(trifluoromethyl)benzamide. Fluopyram being a pyridinylethylbenzamide derivative is widely known as a fungicide (WO-A 2004/16088), belonging to the group of succinate dehydrogenase (SDH) inhibitors and a nematicide (WO-A 2008/126922). However, it is not apparent from the teaching of the publication that fluopyram is highly efficient for improving earliness in cotton. More particularly, the suitability of fluopyram for improving earliness in cotton is not explicitly disclosed.

It has now been found thatFluopyram is outstandingly suitable for improving earliness in cotton. Fluopyram when applied at an earlier growth stage of cotton shows a long lasting effect as the earliness is observed at BBCH stages 71 to 79.

In one embodiment a method for improving earliness in cotton is provided,
wherein Fluopyram, the compound according to formula (I) 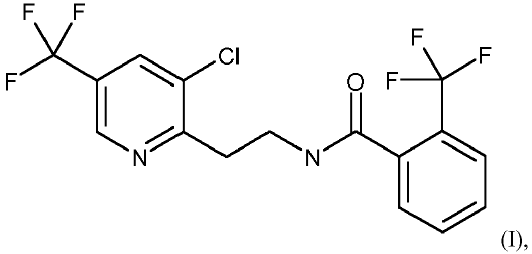 is applied in an effective amount to cotton plants, plant parts thereof, plant propagation material or the soil in which cotton plants are grown or intended to be grown.

In another embodiment a method for improving earliness in cotton is provided, wherein Fluopyram is applied as the single active ingredient to the cotton plants, plant parts thereof, plant propagation material or the soil which the plants are grown or intended to be grown in an effective amount.

In another embodiment a method for improving earliness in cotton is provided, wherein Fluopyram is applied in combination with at least one insecticide to the cotton plants, plant parts thereof, plant propagation material or the soil which the plants are grown or intended to be grown in an effective amount.

In another embodiment a method for improving earliness in cotton is provided, wherein Fluopyram is applied in combination with at least one insecticide selected from the group of nicotinic acetylcholine receptor (nAChR) agonists to the cotton plants, plant parts thereof, plant propagation material or the soil which the plants are grown or intended to be grown in an effective amount.

In another embodiment a method for improving earliness in cotton is provided, wherein Fluopyram is applied in combination with at least one insecticide, wherein the at least one insecticide is a nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor to the cotton plants, plant parts thereof, plant propagation material or the soil which the plants are grown or intended to be grown in an effective amount.

In another embodiment a method for improving earliness in cotton is provided, wherein Fluopyram is applied in combination with Imidacloprid to the cotton plants, plant parts thereof, plant propagation material or the soil which the plants are grown or intended to be grown in an effective amount.

In another embodiment a method for improving earliness in cotton is provided, wherein Fluopyram is applied as the single active ingredient to the cotton plants, plant parts thereof, plant propagation material or the soil which the plants are grown or intended to be grown in an effective amount at BBCH stages 00 to 01.

In another embodiment a method for improving earliness in cotton is provided, wherein Fluopyram is applied in combination with at least one insecticide to the cotton plants, plant parts thereof, plant propagation material or the soil which the plants are grown or intended to be grown in an effective amount at BBCH stages 00 to 01.

In another embodiment a method for improving earliness in cotton is provided, wherein Fluopyram is applied in combination with at least one insecticide being a nicotinic acetylcholine receptor (nAChR) agonist to the cotton plants, plant parts thereof, plant propagation material or the soil which the plants are grown or intended to be grown in an effective amount at BBCH stages 00 to 01.

In another embodiment a method for improving earliness in cotton is provided, wherein Fluopyram is applied in combination with at least one insecticide being a nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor to the cotton plants, plant parts thereof, plant propagation material or the soil which the plants are grown or intended to be grown in an effective amount at BBCH stages 00 to 01.

In another embodiment a method for improving earliness in cotton is provided, wherein Fluopyram is applied in combination with Imidacloprid to the cotton plants, plant parts thereof, plant propagation material or the soil which the plants are grown or intended to be grown in an effective amount at BBCH stages 00 to 01.

In another embodiment a method for improving earliness in cotton is provided, wherein Fluopyram is applied as the single active ingredient to the cotton plants, plant parts thereof, plant propagation material or the soil which the plants are grown or intended to be grown in an effective at BBCH stages 00 to 09.

In another embodiment a method for improving earliness in cotton is provided, wherein Fluopyram is applied in combination with at least one insecticide being a nicotinic acetylcholine receptor (nAChR) agonist to the cotton plants, plant parts thereof, plant propagation material or the soil which the plants are grown or intended to be grown in an effective amount at BBCH stages 00 to 09.

In another embodiment a method for improving earliness in cotton is provided, wherein Fluopyram is applied in combination with at least one insecticide being a nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor to the cotton plants, plant parts thereof, plant propagation material or the soil which the plants are grown or intended to be grown in an effective amount at BBCH stages 00 to 09.

In another embodiment a method for improving earliness in cotton is provided, wherein Fluopyram is applied in combination with Imidacloprid to the cotton plants, plant parts thereof, plant propagation material or the soil which the plants are grown or intended to be grown in an effective amount at BBCH stages 00 to 09.

In another embodiment a method for improving earliness in cotton is provided, wherein Fluopyram is used as the single active ingredient for in-furrow application.

"In-furrow application" means the application of Fluopyram, as single active ingredient or in combination with at least one insecticide, on or into the soil before the cotton seeds are seeded, together with the seeds into the seeding rows of the soil or after the cotton seeds are seeded into the seeding rows on or into the soil. In one embodiment the application takes place before the closing of the seeding rows.

In one embodiment other active ingredients in agrochemical formulations can be applied together with Fluopyram, as single active ingredient or in combination with at least one insecticide.

In one embodiment these active ingredients are fungicides, fertilizers or micronutrients.

In another embodiment a method for improving earliness in cotton is provided, wherein Fluopyram is used in combination with at least one insecticide for in-furrow application.

In another embodiment a method for improving earliness in cotton is provided, wherein Fluopyram is used in combination with at least one insecticide selected from the group of nicotinic acetylcholine receptor (nAChR) agonists for in-furrow application.

In another embodiment a method for improving earliness in cotton is provided, wherein Fluopyram is used in combination with at least one insecticide being a nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor for in-furrow application.

In another embodiment a method for improving earliness in cotton is provided, wherein Fluopyram is used in combination with Imidacloprid for in-furrow application.

In one embodiment the present invention relates to a method for improving earliness in cotton wherein the soil is treated with Fluopyram as the single active ingredient before seeding the cotton seed into the soil.

In one embodiment the present invention relates to a method for improving earliness in cotton wherein the soil is treated with Fluopyram in combination with at least one insecticide before seeding the cotton seed into the soil.

In one embodiment the present invention relates to a method for improving earliness in cotton cotton wherein the soil is treated with Fluopyram in combination with at least one insecticide being a nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor before seeding the cotton seed into the soil.

In one embodiment the present invention relates to a method for improving earliness in cotton cotton wherein the soil is treated with Fluopyram in combination with Imidacloprid before seeding the cotton seed into the soil.

Fluopyram can be used as single active ingredient or in in combination with at least one insecticide, in particular a nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor. The combination of Fluopyram and Imidacloprid is particularly useful. Compositions comprising Fluopyram as single active ingredient or in combination with at least one insecticide, in particular a nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor can be used in foliar or soil application as well as a seed treatment.

The present invention relates also to the use of Fluopyram in combination with at least one insecticide for improving earliness in cotton.

The present invention relates also to the use of Fluopyram in combination with at least one nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor for improving earliness in cotton.

The present invention relates also to the use of Fluopyram in combination with Imidacloprid for improving earliness in cotton.

In one embodiment the present invention relates to a composition comprising Fluopyram for improving earliness in cotton.

In one embodiment the present invention relates to a composition comprising Fluopyram as the single active ingredient for improving earliness in cotton.

In one embodiment the present invention relates to a composition comprising Fluopyram and at least one insecticide for improving earliness in cotton.

In one embodiment the present invention relates to a composition comprising Fluopyram and at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor for improving earliness in cotton.

In one embodiment the present invention relates to a composition comprising Fluopyram and at least one compound selected from the group of nicotinic acetylcholine receptor (nAChR) agonists consisting of Acetamiprid, Clothianidin, Dinotefuran, Imidacloprid, Nitenpyram, Thiacloprid, Thiamethoxam for improving earliness in cotton.

In one embodiment the present invention relates to a composition comprising Fluopyram and Imidacloprid for improving earliness in cotton.

In one embodiment the present invention relates to a method for treating cotton plants or plant parts for improving earliness in cotton by treating the sown seeds or emerging plants with Fluopyram.

In one embodiment the present invention relates to a method for treating cotton plants or plant parts for improving earliness in cotton by treating the sown seeds or emerging plants with Fluopyram in combination with at least one insecticide.

In one embodiment the present invention relates to a method for treating cotton plants or plant parts for improving earliness in cotton by treating the sown seeds or emerging plants with Fluopyram in combination with at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor.

In one embodiment the present invention relates to a method for treating cotton plants or plant parts for improving earliness in cotton by treating the sown seeds or emerging plants with Fluopyram in combination with Imidacloprid.

In one embodiment the present invention relates to a method for treating cotton plants or plant parts for improving earliness in cotton by treating the plants or plant parts with Fluopyram at BBCH stages 00 to 09.

In one embodiment the present invention relates to a method for treating cotton plants or plant parts for improving earliness in cotton by treating the plants or plant parts with Fluopyram in combination with at least one insecticide at BBCH stages 00 to 09.

In one embodiment the present invention relates to a method for treating cotton plants or plant parts for improving earliness in cotton by treating the plants or plant parts with Fluopyram in combination with at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor at BBCH stages 00 to 09.

In one embodiment the present invention relates to a method for treating cotton plants or plant parts for improving earliness in cotton by treating the plants or plant parts with Fluopyram in combination with Imidacloprid at BBCH stages 00 to 09.

In one embodiment the present invention relates to a combination comprising Fluopyram as the single active ingredient or in combination with at least one insecticide for improving earliness in cotton.

In one embodiment the present invention relates to a composition comprising Fluopyram as the single active ingredient or in combination with at least one insecticide for improving earliness in cotton.

In one embodiment the present invention relates to a combipack comprising Fluopyram as the single active ingredient or in combination with at least one insecticide for improving earliness in cotton.

In one embodiment the present invention relates to a tankmix comprising Fluopyram as the single active ingredient or in combination with at least one insecticide for improving earliness in cotton.

In one embodiment the present invention relates to a combination comprising Fluopyram for improving earliness in cotton.

In one embodiment the present invention relates to a composition comprising Fluopyram for improving earliness in cotton.

In one embodiment the present invention relates to a combipack comprising Fluopyram for improving earliness in cotton.

In one embodiment the present invention relates to a tankmix comprising Fluopyram for improving earliness in cotton.

In one embodiment the present invention relates to a combination comprising Fluopyram as the single active ingredient or in combination with at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor for improving earliness in cotton.

In one embodiment the present invention relates to a composition comprising Fluopyram as the single active ingredient or in combination with at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor for improving earliness in cotton.

In one embodiment the present invention relates to a combipack comprising Fluopyram as the single active ingredient or in combination with at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor for improving earliness in cotton.

In one embodiment the present invention relates to a tankmix comprising Fluopyram as the single active ingredient or in combination with at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor for improving earliness in cotton.

In one embodiment the present invention relates to a combination comprising Fluopyram in combination with Imidacloprid for improving earliness in cotton.

In one embodiment the present invention relates to a composition comprising Fluopyram in combination with Imidacloprid for improving earliness in cotton.

In one embodiment the present invention relates to a combipack comprising Fluopyram in combination with Imidacloprid for improving earliness in cotton.

In one embodiment the present invention relates to a tankmix comprising Fluopyram in combination with Imidacloprid for improving earliness in cotton.

### Definitions

In the context of the present invention, " improving earliness in cotton " means a significant increase in open bolls assessed by visual inspection at the BBCH stages 70 to 80, preferably a significant increase (2 to 75 % open bolls), compared with the untreated plant (0% open bolls), more preferably a significant increase (3 - 75% open bolls), compared with the untreated plant (0%); even more preferably a significant in open bolls (5-75% open bolls) compared with the untreated plant (0% open bolls); most preferably a significant in open bolls (by 20-75%) compared with the untreated plant (0 %).

In one embodiment, " improving earliness in cotton " means a significant increase in open bolls assessed by visual inspection at the BBCH stages 76, preferably an increase (at least 20 % open bolls), compared with the untreated plant (0% open bolls).

In one embodiment, " improving earliness in cotton " means a significant increase in open bolls assessed by visual inspection at the BBCH stages 77, preferably an increase (at least 30 % open bolls), compared with the untreated plant (up to 3 % open bolls).

In one embodiment, " improving earliness in cotton " means a significant increase in open bolls assessed by visual inspection at the BBCH stages 78, preferably an increase (at least 50 % open bolls), compared with the untreated plant (up to 8% open bolls).

In the context of the present invention Fluopyram in combination with at least one insecticide according to the invention or to be used according to the invention may be a composition (i. e. a physical mixture) comprising Fluopyram and at least one insecticide. It may also be a combination of Fluopyram with at least one insecticide composed from separate formulations of the single active ingredient components being Fluopyram or at least one insecticide (tank-mix). Another example of a combination of Fluopyram and at least one insecticide according to the invention is that Fluopyram and at least one insecticide are not present together in the same formulation, but packaged separately (combipack), i.e., not jointly preformulated. As such, combipacks include one or more separate containers such as vials, cans, bottles, pouches, bags or canisters, each container containing a separate component for an agrochemical composition, here Fluopyram or at least one insecticide. One example is a two-component combipack. Accordingly the present invention also relates to a two-component combipack, comprising a first component which in turn comprises Fluopyram, a liquid or solid carrier and, if appropriate, at least one surfactant and/or at least one customary auxiliary, and a second component which in turn comprises at least one insecticide, a liquid or solid carrier and, if appropriate, at least one surfactant and/or at least one customary auxiliary. More details, e.g. as to suitable liquid and solid carriers, surfactants and customary auxiliaries are described below.

A combination according to the invention is preferably in the form of a composition, a tank mix, or a combipack.

A preferred embodiment of the present invention is a composition comprising Fluopyram and at least one insecticide being a physical mixture of Fluopyram and at least one insecticide.
A more preferred embodiment is a composition comprising Fluopyram and at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor in a physical mixture.
An even more preferred embodiment is a composition comprising Fluopyram and Imidacloprid in a physical mixture.

The application of Fluopyram as single active ingredient or in combination with at least one insecticide, preferably in combination with at least one nicotinic acetylcholine receptor (nAChR) agonist selected from the group of Acetamiprid, Clothianidin, Dinotefuran, Imidacloprid, Nitenpyram, Thiacloprid, Thiamethoxam, Nicotine and Sulfoxafluor, more preferably in combination with Imidacloprid is preferably applied to the cotton plants or plant parts at particular growth stages of the plant. The term "growth stage" refers to the growth stages as defined by the BBCH Codes in "Growth stages of mono- and dicotyledonous plants", 2nd edition 2001, edited by Uwe Meier from the Federal Biological Research Centre for Agriculture and Forestry. The BBCH codes are a well-established system for a uniform coding of phonologically similar growth stages of all mono- and dicotyledonous plant species. The abbreviation BBCH derives from "Biologische Bundesanstalt, Bundessortenamt und Chemische Industrie".

Some of these BBCH growth stages and BBCH codes for cotton plants are indicated in the following.

### Germination and Leaf Development

BBCH 00 Dry seed

BBCH 01 Beginning of seed imbibition

BBCH 03 Seed imbibition complete

BBCH 05 Radicle emerged from seed

BBCH 06 Elongation of radicle

BBCH 07 Hypocotyl with cotyledons breaking through seed coat

BBCH 08 Hypocotyl with cotyledons growing towards soil surface

BBCH 09 Emergence: hypocotyl with cotyledons breaking through soil surface ("crook stage")

### Development of fruits and seeds

BBCH 71 About 10% of bolls have attained their final size

BBCH 72 About 20% of bolls have attained their final size

BBCH 73 About 30% of bolls have attained their final size

BBCH 74 About 40% of bolls have attained their final size

BBCH 75 About 50% of bolls have attained their final size

BBCH 76 About 60% of bolls have attained their final size

BBCH 77 About 70% of bolls have attained their final size

BBCH 78 About 80% of bolls have attained their final size

BBCH 79 About 90% of bolls have attained their final size

All plants and plant parts can be treated in accordance with the invention.

In the context of the present invention, cotton plants are understood here to mean all cotton plants and plant populations, such as desired and undesired wild plants or crop plants (including naturally occurring crop plants). Cotton plants may be plants which can be obtained by conventional breeding and optimization methods or by biotechnological and genetic engineering methods or combinations of these methods, including the transgenic plants and including the plant varieties which are protectable and non-protectable by plant breeders' rights.

In the context of the present invention, the term "plant parts" are to be understood as meaning all above-ground and below-ground parts and organs of plants, such as shoot, leaf, flower and root, by way of example ears, leaves, needles, stalks, stems, trunks, flowers, fruit bodies, fruits, seed (including seeds of transgenic plants), seedlings, root-stocks, grafts and cuttings, and also roots, and rhizomes. The plant parts also include harvested material and also vegetative and generative propagation material, for example root-stocks, cuttings, grafts, rhizomes, slips and seedlings.

Preferred plant parts to be treated in the context of the present invention are seeds, seedlings, and leaves.

The preferred time of treating the cotton plant or parts thereof as well as the soil where the cotton plant is growing or supposed to grow is at BBCH stages 00 to 09, more preferably at BBCH stages 00 to 05, even more preferably at BBCH stages 00 to 03, and most preferably at BBCH stages 00 to 03.

### Mixtures

Fluopyram may be present in its commercially available formulations and in the use forms, prepared from these formulations, as a mixture with other active ingredients, such as insecticides, attractants, sterilants, bactericides, acaricides, nematicides, fungicides, growth regulators, herbicides, safeners, fertilizers, biological control agents, resistance enhacers or semiochemicals.

Furthermore Fluopyram according to the present invention may comprise one or more insecticides which may be selected from the group consisting of:
(1) Acetylcholinesterase (AChE) inhibitors, for example carbamates, e.g. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC and Xylylcarb or organophosphates, e.g. Acephate, Azamethiphos, Azinphos-ethyl, Azinphos-methyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl)salicylate, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Trichlorfon and Vamidothion;
(2) GABA-gated chloride channel antagonists, for example cyclodiene organochlorines, e.g. Chlordane and Endosulfan or phenylpyrazoles (fiproles), e.g. Ethiprole and Fipronil;
(3) Sodium channel modulators / voltage-dependent sodium channel blockers, for example pyrethroids, e.g. Acrinathrin, Allethrin, d-cis-trans Allethrin, d-trans Allethrin, Bifenthrin, Bioallethrin, Bioallethrin S-cyclopentenyl isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans isomers], Deltamethrin, Empenthrin [(EZ)-(1R) isomers), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans isomer), Prallethrin, Pyrethrine (pyrethrum), Resmethrin, Silafluofen, Tefluthrin, Tetramethrin, Tetramethrin [(1R) isomers)], Tralomethrin and Transfluthrin or DDT or Methoxychlor;
(4) Nicotinic acetylcholine receptor (nAChR) agonists, for example neonicotinoids, e.g. Acetamiprid, Clothianidin, Dinotefuran, Imidacloprid, Nitenpyram, Thiacloprid and Thiamethoxam or Nicotine and Sulfoxaflor;
(5) Nicotinic acetylcholine receptor (nAChR) allosteric activators, for example spinosyns, e.g. Spinetoram and Spinosad;
(6) Chloride channel activators, for example avermectins/milbemycins, e.g. Abamectin, Emamectin benzoate, Lepimectin and Milbemectin;
(7) Juvenile hormone mimics, for example juvenile hormon analogues, e.g. Hydroprene, Kinoprene and Methoprene or Fenoxycarb or Pyriproxyfen;
(8) Miscellaneous non-specific (multi-site) inhibitors, for example alkyl halides, e.g. Methyl bromide and other alkyl halides; or Chloropicrin or Sulfuryl fluoride or Borax or Tartar emetic;
(9) Selective homopteran feeding blockers, e.g. Pymetrozine or Flonicamid;
(10) Mite growth inhibitors, e.g. Clofentezine, Hexythiazox and Diflovidazin or Etoxazole;
(11) Microbial disruptors of insect midgut membranes, e.g. Bacillus thuringiensis subspecies israelensis, Bacillus sphaericus, Bacillus thuringiensis subspecies aizawai, Bacillus thuringiensis subspecies kurstaki, Bacillus thuringiensis subspecies tenebrionis and BT crop proteins: Cry1Ab, Cry1Ac, Cry1Fa, Cry2Ab, mCry3A, Cry3Ab, Cry3Bb, Cry34/35Ab1;
(12) Inhibitors of mitochondrial ATP synthase, for example Diafenthiuron or organotin miticides, e.g. Azocyclotin, Cyhexatin and Fenbutatin oxide or Propargite or Tetradifon;
(13) Uncouplers of oxidative phoshorylation via disruption of the proton gradient, for example Chlorfenapyr, DNOC and Sulfluramid;
(14) Nicotinic acetylcholine receptor (nAChR) channel blockers, for example Bensultap, Cartap hydrochloride, Thiocyclam and Thiosultap-sodium;
(15) Inhibitors of chitin biosynthesis, type 0, for example Bistrifluron, Chlorfluazuron, Diflubenzuron, Flucycloxuron, Flufenoxuron, Hexaflumuron, Lufenuron, Novaluron, Noviflumuron, Teflubenzuron and Triflumuron;
(16) Inhibitors of chitin biosynthesis, type 1, for example Buprofezin;
(17) Moulting disruptors, for example Cyromazine;
(18) Ecdysone receptor agonists, for example Chromafenozide, Halofenozide, Methoxyfenozide and Tebufenozide;
(19) Octopamine receptor agonists, for example Amitraz;
(20) Mitochondrial complex III electron transport inhibitors, for example Hydramethylnon or Acequinocyl or Fluacrypyrim;
(21) Mitochondrial complex I electron transport inhibitors, for example METI acaricides, e.g. Fenazaquin, Fenpyroximate, Pyrimidifen, Pyridaben, Tebufenpyrad and Tolfenpyrad or Rotenone (Derris);
(22) Voltage-dependent sodium channel blockers, e.g. Indoxacarb or Metaflumizone;
(23) Inhibitors of acetyl CoA carboxylase, for example tetronic and tetramic acid derivatives, e.g. Spirodiclofen, Spiromesifen and Spirotetramat;
(24) Mitochondrial complex IV electron transport inhibitors, for example phosphines, e.g. Aluminium phosphide, Calcium phosphide, Phosphine and Zinc phosphide or Cyanide;
(25) Mitochondrial complex II electron transport inhibitors, for example Cyenopyrafen and Cyflumetofen;
(28) Ryanodine receptor modulators, for example diamides, e.g. Chlorantraniliprole, Cyantraniliprole, Flubendiamide and Tetraniliprole;
(29) Further active ingredients with unknown or uncertain mode of action, for example Afidopyropen, Azadirachtin, Benclothiaz, Benzoximate, Bifenazate, Bromopropylate, Chinomethionat, Cryolite, Dicofol, Diflovidazin, Fluensulfone, Flometoquin, Flufenerim, Flufenoxystrobin, Flufiprole, Fluopyram, Flupyradifurone, Fufenozide, Heptafluthrin, Imidaclothiz, Iprodione, Meperfluthrin, Paichongding, Pyflubumide, Pyrifluquinazon, Pyriminostrobin, Tetramethylfluthrin and Iodomethane; furthermore products based on Bacillus firmus (including but not limited to strain CNCM I-1582, such as, for example,VOTiVO TM, BioNem) or one of the following known active compounds:3-bromo-N-{2-bromo-4-chloro-6-[(1-cyclopropylethyl)carbamoyl]phenyl}-1-(3-chloropyridin-2-yl)-1H-pyrazole-5-carboxamide (known from WO2005/077934) and 1-{2-fluoro-4-methyl-5-[(2,2,2-trifluorethyl)sulfinyl]phenyl}-3-(trifluoromethyl)-1H-1,2,4-triazol-5-amine (known from WO2006/043635), {1'-[(2E)-3-(4-chlorophenyl)prop-2-en-1-yl]-5-fluorospiro[indole-3,4'-piperidin]-1(2H)-yl}(2-chloropyridin-4-yl)methanone (known from WO2003/106457), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494), 3-(2,5-dimethylphenyl)-4-hydroxy-8-methoxy-1,8-diazaspiro[4.5]dec-3-en-2-one (known from WO2009/049851), 3-(2,5-dimethylphenyl)-8-methoxy-2-oxo-1,8-diazaspiro[4.5]dec-3-en-4-yl ethyl carbonate (known from WO2009/049851), 4-(but-2-yn-1-yloxy)-6-(3,5-dimethylpiperidin-1-yl)-5-fluoropyrimidine (known from WO2004/099160), 4-(but-2-yn-1-yloxy)-6-(3-chlorophenyl)pyrimidine (known from WO2003/076415), PF1364 (CAS-Reg.No. 1204776-60-2), 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (known from WO2005/085216), 4-{5-[3-chloro-5-(trifluoromethyl)phenyl]-5-(trifluoromethyl)-4,5-dihydro-1,2-oxazol-3-yl}-N-{2-oxo-2-[(2,2,2-trifluoroethyl)amino]ethyl}-1-naphthamide (known from WO2009/002809), methyl 2-[2-({[3-bromo-1-(3-chloropyridin-2-yl)-1H-pyrazol-5-yl]carbonyl}amino)-5-chloro-3-methylbenzoyl]-2-methylhydrazinecarboxylate (known from WO2005/085216), methyl 2-[2-({[3-bromo-1-(3-chloropyridin-2-yl)-1H-pyrazol-5-yl]carbonyl}amino)-5-cyano-3-methylbenzoyl]-2-ethylhydrazinecarboxylate (known from WO2005/085216), methyl 2-[2-({[3-bromo-1-(3-chloropyridin-2-yl)-1H-pyrazol-5-yl]carbonyl}amino)-5-cyano-3-methylbenzoyl]-2-methylhydrazinecarboxylate (known from WO2005/085216), methyl 2-[3,5-dibromo-2-({[3-bromo-1-(3-chloropyridin-2-yl)-1H-pyrazol-5-yl]carbonyl}amino)benzoyl]-2-ethylhydrazinecarboxylate (known from WO2005/085216), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (known from WO2010/069502), N-[2-(5-amino-1,3,4-thiadiazol-2-yl)-4-chloro-6-methylphenyl]-3-bromo-1-(3-chloropyridin-2-yl)-1H-pyrazole-5-carboxamide (known from CN102057925), 3-chloro-N-(2-cyanopropan-2-yl)-N-[4-(1,1,1,2,3,3,3-heptafluoropropan-2-yl)-2-methylphenyl]phthalamide (known from WO2012/034472), 8-chloro-N-[(2-chloro-5-methoxyphenyl)sulfonyl]-6-(trifluoromethyl)imidazo[1,2-a]pyridine-2-carboxamide (known from WO2010/129500), 8-chloro-N-[(2-chloro-5-methoxyphenyl)sulfonyl]-6-(trifluoromethyl)imidazo[1,2-a]pyridine-2-carboxamide (known from WO2009/080250), N-[(2E)-1-[(6-chloropyridin-3-yl)methyl]pyridin-2(1H)-ylidene]-2,2,2-trifluoroacetamide (known from WO2012/029672), 1-[(2-chloro-1,3-thiazol-5-yl)methyl]-4-oxo-3-phenyl-4H-pyrido[1,2-a]pyrimidin-1-ium-2-olate (known from WO2009/099929), 1-[(6-chloropyridin-3-yl)methyl]-4-oxo-3-phenyl-4H-pyrido[1,2-a]pyrimidin-1-ium-2-olate (known from WO2009/099929), (5S,8R)-1-[(6-chloropyridin-3-yl)methyl]-9-nitro-2,3,5,6,7,8-hexahydro-1H-5,8-epoxyimidazo[1,2-a]azepine (known from WO2010/069266), (2E)-1-[(6-chloropyridin-3-yl)methyl]-N'-nitro-2-pentylidenehydrazinecarboximidamide (known from WO2010/060231), 4-(3-{2,6-dichloro-4-[(3,3-dichloroprop-2-en-1-yl)oxy]phenoxy}propoxy)-2-methoxy-6-(trifluoromethyl)pyrimidine (known from CN101337940), N-[2-(tert-butylcarbamoyl)-4-chloro-6-methylphenyl]-1-(3-chloropyridin-2-yl)-3-(fluoromethoxy)-1H-pyrazole-5-carboxamide (known from WO2008/134969).

All named combination partners of the classes (1) to (29), as well as Fluopyram of the present invention can, if their functional groups enable this, optionally form salts with suitable bases or acids.

In addition, the described positive effect of Fluopyram on improving earliness in cotton can be promoted by an additional treatment with at least one insecticide, preferably in combination with at least one nicotinic acetylcholine receptor (nAChR) agonists selected from the group consisting of Acetamiprid, Clothianidin, Dinotefuran, Imidacloprid, Nitenpyram, Thiacloprid, Thiamethoxam, Nicotine and Sulfoxafluor, more preferably in combination with Imidacloprid.

The combined use of Fluopyram, with genetically modified cultivars, especially of transgenic cotton cultivars, is additionally likewise possible.

In one embodiment a composition comprising Fluopyram according to the present invention may comprise one or more additional insecticides which may be selected from the group consisting of:
(4) Nicotinic acetylcholine receptor (nAChR) agonists, for example neonicotinoids, e.g. Acetamiprid, Clothianidin, Dinotefuran, Imidacloprid, Nitenpyram, Thiacloprid and Thiamethoxam or Nicotine or Sulfoxaflor.

In one embodiment a composition comprising Fluopyram according to the present invention may comprise one or more additional nicotinic acetylcholine receptor (nAChR) agonists which may be selected from the group consisting of Acetamiprid, Clothianidin, Dinotefuran, Imidacloprid, Nitenpyram, Thiacloprid and Thiamethoxam, Nicotine and Sulfoxaflor.

In one embodiment a composition comprising Fluopyram according to the present invention may comprise one or more additional nicotinic acetylcholine receptor (nAChR) agonists which may be selected from the group consisting of Acetamiprid, Clothianidin, Dinotefuran, Imidacloprid, Nitenpyram, Thiacloprid and Thiamethoxam, Nicotine and Sulfoxaflor.

In one embodiment a combipack comprising Fluopyram according to the present invention comprises one or more additional nicotinic acetylcholine receptor (nAChR) agonists which may be selected from the group consisting of Acetamiprid, Clothianidin, Dinotefuran, Imidacloprid, Nitenpyram, Thiacloprid and Thiamethoxam, Nicotine and Sulfoxaflor.

In one embodiment a composition comprising fluopyram according to the present invention may comprise in addition Imidacloprid.

In one embodiment a combipack comprising fluopyram according to the present invention comprises in addition Imidacloprid.

In one embodiment a composition comprising Fluopyram according to the present invention may comprise in addition one insecticide in a ratio by weight of 1:1000 to 1000:1, more preferably of 1:250 to 250:1, more even more preferably of 1:100 to 100:1, most preferably of 1:25 to 25:1, most particularly preferably 1:10 to 10:1.

In one embodiment a composition comprising Fluopyram according to the present invention may comprise in addition one nicotinic acetylcholine receptor (nAChR) agonists in a ratio by weight of 1:1000 to 1000:1, more preferably 1:250 to 250:1, more even more preferably 1:100 to 100:1, most preferably 1:25 to 25:1, most particularly preferably 1:10 to 10:1.

In one embodiment a composition comprising Fluopyram according to the present invention may comprise in addition one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor in a ratio by weight of 1:1000 to 1000:1, more preferably 1:250 to 250:1, more even more preferably 1:100 to 100:1, most preferably 1:25 to 25:1, most particularly preferably 1:10 to 10:1.

In one embodiment a composition comprising Fluopyram according to the present invention may comprise in addition Imidacloprid in a ratio by weight of 1:1000 to 1000:1, more preferably 1:250 to 250:1, more even more preferably 1:100 to 100:1, most preferably 1:25 to 25:1, most particularly preferably 1:10 to 10:1.

In one embodiment the active ingredients of a composition according to the present invention consist of Fluopyram and Imidacloprid.

In one embodiment the active ingredient of a composition according to the present invention consists of Fluopyram.

### Compositions/Formulations

The compositions of the present invention comprising Fluopyram may further comprise at least one other additional component such as auxiliaries, solvents, carriers or supports, filler, surfactants or extenders, all being agriculturally acceptable.

The compositions of the present invention comprising Fluopyram may further comprise at least one other additional component such as agriculturally suitable auxiliaries, solvents, carriers, surfactants or extenders.

According to the invention, a carrier is a natural or synthetic, organic or inorganic substance with which the active ingredients are mixed or combined for better applicability, in particular for application to plants or plant parts or seed. The carrier, which may be solid or liquid, is generally inert and should be suitable for use in agriculture.

Useful solid carriers include: for example ammonium salts and natural rock flours, such as kaolins, clays, talc, chalk, quartz, attapulgite, montmorillonite or diatomaceous earth, and synthetic rock flours, such as finely divided silica, alumina and silicates; useful solid carriers for granules include: for example, crushed and fractionated natural rocks such as calcite, marble, pumice, sepiolite and dolomite, and also synthetic granules of inorganic and organic flours, and granules of organic material such as paper, sawdust, coconut shells, maize cobs and tobacco stalks; useful emulsifiers and/or foam-formers include: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and also protein hydrolysates; suitable dispersants are nonionic and/or ionic substances, for example from the classes of the alcohol-POE and/or -POP ethers, acid and/or POP POE esters, alkylaryl and/or POP POE ethers, fat and/or POP POE adducts, POE- and/or POP-polyol derivatives, POE- and/or POP-sorbitan or -sugar adducts, alkyl or aryl sulphates, alkyl- or arylsulphonates and alkyl or aryl phosphates or the corresponding PO-ether adducts. Additionally suitable are oligo- or polymers, for example those derived from vinylic monomers, from acrylic acid, from EO and/or PO alone or in combination with, for example, (poly)alcohols or (poly)amines. It is also possible to use lignin and its sulphonic acid derivatives, unmodified and modified celluloses, aromatic and/or aliphatic sulphonic acids and also their adducts with formaldehyde.

The active ingredients, in particular Fluopyram can be converted to the customary formulations, such as solutions, emulsions, wettable powders, water- and oil-based suspensions, powders, dusts, pastes, soluble powders, soluble granules, granules for broadcasting, suspoemulsion concentrates, natural products impregnated with active ingredient, synthetic substances impregnated with active ingredient, fertilizers and also microencapsulations in polymeric substances.

The active ingredients, in particular Fluopyram can be applied as such, in the form of their formulations or the use forms prepared therefrom, such as ready-to-use solutions, emulsions, water- or oil-based suspensions, powders, wettable powders, pastes, soluble powders, dusts, soluble granules, granules for broadcasting, suspoemulsion concentrates, natural products impregnated with active ingredient, synthetic substances impregnated with active ingredient, fertilizers and also microencapsulations in polymeric substances. Application is accomplished in a customary manner, for example by watering, spraying, atomizing, broadcasting, dusting, foaming, spreading-on and the like. It is also possible to deploy the active ingredients by the ultra-low volume method or to inject the active ingredient preparation/the active ingredient itself into the soil. It is also possible to treat the seed of the plants.

The formulations mentioned can be prepared in a manner known per se, for example by mixing the active ingredients with at least one customary extender, solvent or diluent, emulsifier, dispersant and/or binder or fixing agent, wetting agent, a water repellent, if appropriate siccatives and UV stabilizers and if appropriate dyes and pigments, antifoams, preservatives, secondary thickeners, stickers, gibberellins and also other processing auxiliaries.

The present invention includes not only formulations which are already ready for use and can be deployed with a suitable apparatus to the plant or the seed, but also commercial concentrates which have to be diluted with water prior to use.

The auxiliaries used may be those substances which are suitable for imparting particular properties to the composition itself or and/or to preparations derived therefrom (for example spray liquors, seed dressings), such as certain technical properties and/or also particular biological properties. Typical auxiliaries include: extenders, solvents and carriers.

Suitable extenders are, for example, water, polar and nonpolar organic chemical liquids, for example from the classes of the aromatic and nonaromatic hydrocarbons (such as paraffins, alkylbenzenes, alkylnaphthalenes, chlorobenzenes), the alcohols and polyols (which may optionally also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulphones and sulphoxides (such as dimethyl sulphoxide).

Liquefied gaseous extenders or carriers are understood to mean liquids which are gaseous at standard temperature and under standard pressure, for example aerosol propellants such as halohydrocarbons, or else butane, propane, nitrogen and carbon dioxide.

In the formulations it is possible to use tackifiers such as carboxymethylcellulose, natural and synthetic polymers in the form of powders, granules or latices, such as gum arabic, polyvinyl alcohol and polyvinyl acetate, or else natural phospholipids such as cephalins and lecithins and synthetic phospholipids. Further additives may be mineral and vegetable oils.

If the extender used is water, it is also possible to use, for example, organic solvents as auxiliary solvents. Useful liquid solvents are essentially: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example petroleum fractions, alcohols such as butanol or glycol and their ethers and esters, ketones such as acetone, methyl ethyl ketone, methyl isobutyl ketone or cyclohexanone, strongly polar solvents such as dimethylformamide and dimethyl sulphoxide, or else water.

Compositions comprising Fluopyram or combinations of Fluopyram and at least one insecticide, in particular Imidacloprid may additionally comprise further components, for example surfactants. Suitable surfactants are emulsifiers and/or foam formers, dispersants or wetting agents having ionic or nonionic properties, or mixtures of these surfactants. Examples thereof are salts of polyacrylic acid, salts of lignosulphonic acid, salts of phenolsulphonic acid or naphthalenesulphonic acid, polycondensates of ethylene oxide with fatty alcohols or with fatty acids or with fatty amines, substituted phenols (preferably alkylphenols or arylphenols), salts of sulphosuccinic esters, taurine derivatives (preferably alkyl taurates), phosphoric esters of polyethoxylated alcohols or phenols, fatty esters of polyols, and derivatives of the compounds containing sulphates, sulphonates and phosphates, for example alkylaryl polyglycol ethers, alkylsulphonates, alkyl sulphates, arylsulphonates, protein hydrolysates, lignosulphite waste liquors and methylcellulose. The presence of a surfactant is necessary if one of the active ingredients and/or one of the inert carriers is insoluble in water and when application is effected in water. The proportion of surfactants is between 5 and 40 per cent by weight of the inventive composition.

It is possible to use dyes such as inorganic pigments, for example iron oxide, titanium oxide and Prussian Blue, and organic dyes such as alizarin dyes, azo dyes and metal phthalocyanine dyes, and trace nutrients such as salts of iron, manganese, boron, copper, cobalt, molybdenum and zinc.

Further additives may be perfumes, mineral or vegetable, optionally modified oils, waxes and nutrients (including trace nutrients), such as salts of iron, manganese, boron, copper, cobalt, molybdenum and zinc.

Additional components may be stabilizers, such as cold stabilizers, preservatives, antioxidants, light stabilizers, or other agents which improve chemical and/or physical stability.

If appropriate, other additional components may also be present, for example protective colloids, binders, adhesives, thickeners, thixotropic substances, penetrants, stabilizers, sequestering agents, complex formers. In general, the active ingredients can be combined with any solid or liquid additive commonly used for formulation purposes.

The formulations contain generally between about 0.05 and about 99% by weight, about 0.01 and about 98% by weight, preferably between about 0.1 and about 95% by weight, more preferably between about 0.5 and about 90% of total active ingredient, most preferably between about 10 and about 70 per cent by weight.

These compositions include not only compositions which are ready to be applied to the plant or seed to be treated by means of a suitable device, such as a spraying or dusting device, but also concentrated commercial compositions which must be diluted before they are applied to the crop.

In one embodiment, Fluopyram is applied by dipping, spraying, atomizing, irrigating, evaporating, painting, spreading-on, watering (drenching), drip irrigating, chemigating (i.e. by addition of the active ingredients to the irrigation water, injection and in hydroponic/mineral systems) or injecting the plants, plant parts, plants growing from seedlings, root-stocks, grafts and cuttings or the soil to be treated.

In one embodiment, Fluopyram is applied by dipping, spraying, atomizing, irrigating, evaporating, painting, spreading-on, watering (drenching), drip irrigating, chemigating or injecting seedlings, root-stocks, grafts and cuttings, stems, shoots, trunks, and leaves to be treated.

In one embodiment, Fluopyram is applied by dipping, spraying, atomizing, irrigating, evaporating, painting, spreading-on, watering (drenching), drip irrigating, chemigating or injecting seedlings, root-stocks, grafts and cuttings, the stems, shoots, trunks, and leaves to be treated.

In one embodiment the present invention relates to a method for treating cotton plants or plant parts for improving earliness in cotton by treating them with Fluopyram at an application rate of 10 to 600 g of Fluopyram / ha.

In one embodiment the present invention relates to a method for treating cotton plants or plant parts for improving earliness in cotton by treating them with Fluopyram at an application rate of 25 to 500 g of Fluopyram / hectare (ha).

In one embodiment the present invention relates to a method for treating cotton plants or plant parts for improving earliness in cotton by treating them with Fluopyram at an application rate of 50 to 400 g of Fluopyram / hectare (ha).

In one embodiment the present invention relates to a method for treating cotton plants or plant parts for improving earliness in cotton by treating them with Fluopyram at an application rate of 100 to 300 g of Fluopyram/ha.

In one embodiment the present invention relates to a method for treating cotton plants or plant parts for improving earliness in cotton by treating them with Fluopyram in combination with at least one insecticide at an application rate of 25 g to 2000 g of total active ingredients / ha.

In one embodiment the present invention relates to a method for treating cotton plants or plant parts for improving earliness in cotton by treating them with Fluopyram in combination with at least one insecticide at an application rate of 50 g to 1500 g of total active ingredient / ha.

In one embodiment the present invention relates to a method for treating cotton plants or plant parts for improving earliness in cotton by treating them with Fluopyram in combination with at least one insecticide at an application rate of 100 g to 1000 g of total active ingredient / ha.

In one embodiment the present invention relates to a method for treating cotton plants or plant parts for improving earliness in cotton by treating them with Fluopyram in combination with at least one insecticide at an application rate of 250 g to 750 g of total active ingredient / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 25 g to 2000 g of total active ingredient / ha whereof Fluopyram is applied at a rate of 10 g to 600 g of Fluopyram / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 50 g to 1500 g of total active ingredient / ha whereof Fluopyram is applied at a rate of 25 g to 500 g of Fluopyram / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 100 g to 1000 g of total active ingredients / ha whereof Fluopyram is applied at a rate of 50 g to 400 g of Fluopyram / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 250 g to 750 g of total active ingredient / ha whereof Fluopyram is applied at a rate of 100 g to 300 g of Fluopyram / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 25 g/ to 2000 g of total active ingredient / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 50 g to 1500 g of total active ingredient / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 100 g to 1000 g of total active ingredient / ha.

In one embodiment the present invention relates to a method for treating cotton plants or plant parts for improving earliness in cotton by treating them with Fluopyram in combination with at least one nicotinic acetylcholine receptor (nAChR) agonists selected from the group consisting of Acetamiprid, Clothianidin, Dinotefuran, Imidacloprid, Nitenpyram, Thiacloprid and Thiamethoxam, Nicotine and Sulfoxaflor at an application rate of 250 g to 750 g of total active ingredient / ha.

In one embodiment the present invention relates to a method for treating cotton plants or plant parts for improving earliness in cotton by treating them with Fluopyram in combination with Imidacloprid at an application rate of 25 g to 2000 g of total active ingredient/ ha.

In one embodiment the present invention relates to a method for treating cotton plants or plant parts for improving earliness in cotton by treating them with Fluopyram in combination with Imidacloprid at an application rate of 50 g to 1500 g of total active ingredient/ ha.

In one embodiment the present invention relates to a method for treating cotton plants or plant parts for improving earliness in cotton by treating them with Fluopyram in combination with Imidacloprid at an application rate of 100 g to 1000 g of total active ingredient/ ha.

In one embodiment the present invention relates to a method for treating cotton plants or plant parts for improving earliness in cotton by treating them with Fluopyram in combination with Imidacloprid at an application rate of 250 g to 750 g of total active ingredient/ ha.

In one embodiment the present invention relates to a method for treating cotton plants or plant parts for improving earliness in cotton by treating them with Fluopyram in combination with Imidacloprid at an application rate of 10 g to 600 g of Fluopyram/ ha and 10g/ha to 1000 g/ha Imidacloprid.

In one embodiment the present invention relates to a method for treating cotton plants or plant parts for improving earliness in cotton by treating them with Fluopyram in combination with Imidacloprid at an application rate of 25 g to 500 g of Fluopyram/ ha and 25g/ha to 750 g/ha Imidacloprid.

In one embodiment the present invention relates to a method for treating cotton plants or plant parts for improving earliness in cotton by treating them with Fluopyram in combination with Imidacloprid at an application rate of 50 g to 400 g of Fluopyram/ ha and 50g/ha to 500 g/ha Imidacloprid.

In one embodiment the present invention relates to a method for treating cotton plants or plant parts for improving earliness in cotton by treating them with Fluopyram in combination with Imidacloprid at an application rate of 100 g to 300 g of Fluopyram/ ha and 100g/ha to 400 g/ha Imidacloprid.

In one embodiment the different application rates as disclosed above can be used for treating the cotton plants or parts thereof to be treated being at BBCH stages 00 to 10, more preferably stages 00 to 05, most preferably the stages 00 to 03.

In one embodiment the different application rates as disclosed above can be used for treating the soil where the cotton plant is growing or supposed to grow.

In one embodiment the different application rates as disclosed above can be used for in-furrow treating of the soil where the cotton plant is growing or supposed to grow.

In one embodiment the application rate of Fluopyram is 0.025 to 0.5 kg/ha.

### Seed Treatment

The invention furthermore includes a method for treating seed.

A further aspect of the present invention relates in particular to seeds (dormant, primed, pregerminated or even with emerged roots and leaves) treated with Fluopyram, optionally in combination with at least one insecticide, in particular a nicotinic acetylcholine receptor (nAChR) agonist. The inventive seeds are used in methods for improving earliness in cotton. In these methods, seed treated with at least one inventive active ingredient is used.

Fluopyram, optionally in combination with at least one insecticide, in particular a nicotinic acetylcholine receptor (nAChR) agonist is also suitable for the treatment of seeds and young seedlings. A large part of the damage to crop plants caused by harmful organisms is triggered by the infection of the seeds before sowing or after germination of the plant. This phase is particularly critical since the roots and shoots of the growing plant are particularly sensitive, and even small damage may result in the death of the plant. Accordingly, there is great interest in protecting the seed and the germinating plant by using appropriate compositions.

It is also desirable to optimize the amount of the active ingredient used so as to provide the best possible protection for the seeds, the germinating plants and emerged seedlings from attack by phytopathogenic fungi, but without damaging the plants themselves by the active ingredient used. In particular, methods for the treatment of seed should also take into consideration the intrinsic phenotypes of transgenic plants in order to achieve optimum protection of the seed and the germinating plant with a minimum of crop protection compositions being employed.

The present invention therefore also relates to a method for protecting seeds, germinating plants and emerged seedlings against attack by animal pests and/or phytopathogenic harmful microorganisms by treating the seeds with an inventive composition. The invention also relates to the use of the compositions according to the invention for treating seeds for protecting the seeds, the germinating plants and emerged seedlings against animal pests and/or phytopathogenic microorganisms or for improving earliness in the future cotton plants. The invention further relates to seeds which have been treated with an inventive composition for protection from animal pests and/or phytopathogenic microorganisms or for improving earliness in cotton.

One of the advantages of the present invention is thatthe treatment of the seeds with these compositions not only protects the seed itself, but also the resulting plants after emergence, from animal pests and/or phytopathogenic harmful microorganisms. In this way, the immediate treatment of the crop at the time of sowing or shortly thereafter protect plants as well as seed treatment in prior to sowing.It is likewise considered to be advantageous that the inventive active ingredients or compositions can be used especially also for transgenic seed, in which case the plant which grows from this seed is capable of expressing a protein which acts against pests, herbicidal damage or abiotic stress. The treatment of such seeds with the inventive active ingredients or compositions, for example an insecticidal protein, can result in control of certain pests. Surprisingly, a further synergistic effect can be observed in this case, which additionally increases the effectiveness for protection against attack by pests., microorganisms, weeds or abiotic stress.

Fluopyram, optionally in combination with at least one insecticide, in particular a nicotinic acetylcholine receptor (nAChR) agonist is suitable for protection of cotton seed. As also described below, the treatment of transgenic seed with the inventive active ingredients or compositions is of particular significance. This refers to the seed of plants containing at least one heterologous gene which allows the expression of a polypeptide or protein, e.g. having insecticidal properties. These heterologous genes in transgenic seeds may originate, for example, from microorganisms of the species Bacillus, Rhizobium, Pseudomonas, Serratia, Trichoderma, Clavibacter, Glomus or Gliocladium. These heterologous genes preferably originate from Bacillus sp., in which case the gene product is effective against the European corn borer and/or the Western corn rootworm. Particularly preferably, the heterologous genes originate from Bacillus thuringiensis.

In the context of the present invention, a composition comprising Fluopyram, optionally in combination with at least one insecticide, in particular a nicotinic acetylcholine receptor (nAChR) agonist is applied to seeds either alone or in a suitable formulation. Preferably, the seed is treated in a state in which it is sufficiently stable for no damage to occur in the course of treatment. In general, seeds can be treated at any time between harvest and some time after sowing. It is customary to use seed which has been separated from the plant and freed from cobs, shells, stalks, coats, hairs or the flesh of the fruits. For example, it is possible to use seed which has been harvested, cleaned and dried down to a moisture content of less than 15% by weight. Alternatively, it is also possible to use seed which, after drying, for example, has been treated with water and then dried again, or seeds just after priming, or seeds stored in primed conditions or pre-germinated seeds, or seeds sown on nursery trays, tapes or paper.

When treating the seeds, it generally has to be ensured that the amount of the inventive composition applied to the seed and/or the amount of further additives is selected such that the germination of the seed is not impaired, or that the resulting plant is not damaged. This must be ensured particularly in the case of active ingredients which can exhibit phytotoxic effects at certain application rates.

Fluopyram, optionally in combination with at least one insecticide, in particular a nicotinic acetylcholine receptor (nAChR) agonist can be applied directly, i.e. without containing any other components and without having been diluted. In general, it is preferable to apply the compositions to the seed in the form of a suitable formulation. Suitable formulations and methods for seed treatment are known to those skilled in the art Fluopyram, optionally in combination with at least one insecticide, in particular a nicotinic acetylcholine receptor (nAChR) agonist can be converted to the customary formulations relevant to on-seed applications, such as solutions, emulsions, suspensions, powders, foams, slurries or combined with other coating compositions for seed, such as film forming materials, pelleting materials, fine iron or other metal powders, granules, coating material for inactivated seeds, and also ULV formulations.

These formulations are prepared in a known manner, by mixing the active ingredients or active ingredient combination with customary additives, for example customary extenders and solvents or diluents, dyes, wetting agents, dispersants, emulsifiers, antifoams, preservatives, secondary thickeners, adhesives, gibberellins, and also water.

Useful dyes which may be present in the seed dressing formulations usable in accordance with the invention are all dyes which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of active agrochemical ingredients. Usable with preference are alkylnaphthalenesulphonates, such as diisopropyl- or diisobutylnaphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients. Usable with preference are nonionic or anionic dispersants or mixtures of nonionic or anionic dispersants. Useful nonionic dispersants include especially ethylene oxide/propylene oxide block polymers, alkylphenol polyglycol ethers and tristryrylphenol polyglycol ether, and the phosphated or sulphated derivatives thereof. Suitable anionic dispersants are especially lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Silicone antifoams and magnesium stearate can be used with preference.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances usable for such purposes in agrochemical compositions. Preferred examples include cellulose derivatives, acrylic acid derivatives, xanthan, modified clays and finely divided silica.

Adhesives which may be present in the seed dressing formulations usable in accordance with the invention are all customary binders usable in seed dressing products. Preferred examples include polyvinylpyrrolidone, polyvinyl acetate, polyvinyl alcohol and tylose.

The formulations for on-seed applications usable in accordance with the invention can be used to treat a wide variety of different kinds of seed either directly or after prior dilution with water. For instance, the concentrates or the preparations obtainable therefrom by dilution with water can be used to dress the seed of cereals, such as wheat, barley, rye, oats, and triticale, and also seeds of maize, soybean, rice, oilseed rape, peas, beans, cotton, sunflowers, and beets, or else a wide variety of different vegetable seeds. The formulations usable in accordance with the invention, or the dilute preparations thereof, can also be used for seeds of transgenic plants. In this case, additional synergistic effects may also occur in interaction with the substances formed by expression.

For treatment of seeds with the formulations usable in accordance with the invention, or the preparations prepared therefrom by adding water, all mixing units usable customarily for on-seed applications are useful. Specifically, the procedure in on-seed applications is to place the seeds into a mixer, to add the particular desired amount of the formulations, either as such or after prior dilution with water, and to mix everything until all applied formulations are distributed homogeneously on the seeds. If appropriate, this is followed by a drying operation.

The application rate of the formulations usable in accordance with the invention can be varied within a relatively wide range. It is guided by the particular content of the active ingredients in the formulations and by the seeds. The application rates of each single active ingredient is generally between 0.001 and 50 g of Fluopyram per kilogram of seed, preferably between 0.01 and 25 g of Fluopyram per kilogram of seed, more preferably between 0.05 and 25 g of Fluopyram per kilogram of seed, most preferably between 0.1 and 20 g of Fluopyram per kilogram of seed.

The application rate of the formulations usable in accordance with the invention can be varied within a relatively wide range. It is guided by the particular content of the active ingredients in the formulations and by the seeds. The application rates of each single active ingredient is generally between 0.001 and 100 g of total active ingredient per kilogram of seed, preferably between 0.01 and 25 g of total active ingredient per kilogram of seed, more preferably between 0.05 and 25 g of total active ingredient per kilogram of seed, most preferably between 0.1 and 20 g of total active ingredient per kilogram of seed,

### GMOs

As already mentioned above, it is possible to treat all plants and their parts in accordance with the invention. In a preferred embodiment, wild plant species and plant cultivars, or those obtained by conventional biological breeding methods, such as crossing or protoplast fusion, and also parts thereof, are treated. In a further preferred embodiment, transgenic plants and plant cultivars obtained by genetic engineering methods, if appropriate in combination with conventional methods (Genetically Modified Organisms), and parts thereof are treated. The terms "parts" or "parts of plants" or "plant parts" have been explained above. More preferably, plants of the plant cultivars which are commercially available or are in use are treated in accordance with the invention. Plant cultivars are understood to mean plants which have new properties ("traits") and have been obtained by conventional breeding, by mutagenesis or by recombinant DNA techniques. They can be cultivars, varieties, bio- or genotypes.

The method of treatment according to the invention can be used in the treatment of genetically modified organisms (GMOs), e.g. plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stresses).

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance.

Plants or plant cultivars (obtained by plant biotechnology methods such as genetic engineering) which may also be treated according to the invention show altered quantity, quality and/or storage-stability of the harvested product and/or altered properties of specific ingredients of the harvested product.

Plants or plant cultivars (that can be obtained by plant biotechnology methods such as genetic engineering) which may also be treated according to the invention are plants, such as cotton plants, with altered fiber characteristics. Such plants can be obtained by genetic transformation, or by selection of plants contain a mutation imparting such altered fiber characteristics.

Plants or plant cultivars (that can be obtained by plant biotechnology methods such as genetic engineering) which may also be treated according to the invention are plants, such as oilseed rape or related Brassica plants, with altered oil profile characteristics. Such plants can be obtained by genetic transformation, or by selection of plants contain a mutation imparting such altered oil profile characteristics.

Plants or plant cultivars (that can be obtained by plant biotechnology methods such as genetic engineering) which may also be treated according to the invention are plants, such as oilseed rape or related Brassica plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Plants or plant cultivars (that can be obtained by plant biotechnology methods such as genetic engineering) which may also be treated according to the invention are plants, such as Tobacco plants, with altered post-translational protein modification patterns.

Particularly useful transgenic plants which may be treated according to the invention are plants containing transformation events, or a combination of transformation events, and that are listed for example in the databases for various national or regional regulatory agencies including Event 531/ PV-GHBK04 (cotton, insect control, described in WO 2002/040677), Event 1143-14A (cotton, insect control, not deposited, described in WO 06/128569); Event 1143-51B (cotton, insect control, not deposited, described in WO 06/128570); Event 1445 (cotton, herbicide tolerance, not deposited, described in US-A 2002-120964 or WO 02/034946, Event 281-24-236 (cotton, insect control - herbicide tolerance, deposited as PTA-6233, described in WO 05/103266 or US-A 2005-216969); Event 3006-210-23 (cotton, insect control - herbicide tolerance, deposited as PTA-6233, described in US-A 2007-143876 or WO 05/103266); Event CE43-67B (cotton, insect control, deposited as DSM ACC2724, described in US-A 2009-217423 or WO 06/128573); Event CE44-69D (cotton, insect control, not deposited, described in US-A 2010-0024077); Event CE44-69D (cotton, insect control, not deposited, described in WO 06/128571); Event CE46-02A (cotton, insect control, not deposited, described in WO 06/128572); Event COT102 (cotton, insect control, not deposited, described in US-A 2006-130175 or WO 04/039986); Event COT202 (cotton, insect control, not deposited, described in US-A 2007-067868 or WO 05/054479); Event COT203 (cotton, insect control, not deposited, described in WO 05/054480); Event GHB119 (cotton, insect control - herbicide tolerance, deposited as ATCC PTA-8398, described in WO 08/151780); Event GHB614 (cotton, herbicide tolerance, deposited as ATCC PTA-6878, described in US-A 2010-050282 or WO 07/017186); Event LLcotton25 (cotton, herbicide tolerance, deposited as ATCC PTA-3343, described in WO 03/013224 or US-A 2003-097687); Event MON15985 (cotton, insect control, deposited as ATCC PTA-2516, described in US-A 2004-250317 or WO 02/100163); Event MON88913 (cotton, herbicide tolerance, deposited as ATCC PTA-4854, described in WO 04/072235 or US-A 2006-059590); Event MON88701 (cotton, herbicide tolerance, deposited as PTA-11754, described in WO 2012/134808), Event T304-40 (cotton, insect control - herbicide tolerance, deposited as ATCC PTA-8171, described in US-A 2010-077501 or WO 08/122406); Event T342-142 (cotton, insect control, not deposited, described in WO 06/128568); event MON88701 (cotton, ATCC Accession N° PTA-11754, WO 2012/134808A1), event pDAB4468.18.07.1 (cotton, herbicide tolerance, ATCC Accession N° PTA-12456, WO2013112525A2), event pDAB4468.19.10.3 (cotton, herbicide tolerance, ATCC Accession N° PTA-12457, WO2013112527A1).

The example which follows serves to illustrate the invention, but without restricting it.

### Examples:

The following example illustrates how Fluopyram improves earliness in cotton.

Cotton (*Gossypium hirsutum*) of the variety DP 1050 B2BRF was planted in a field trial in Brooks, GA, United States in May 2013. Temik (comprising the active ingredient Aldicarb ([2-methyl-2-(methylthio) propionaldehyde O-(methylcarbamoyl)oxime]) and Fluopyram in combination with Imidacloprid (Velum total) were applied in furrow at the same day. Temik was used for controlling insects in cotton and was provided as a Granule Release formulation with 15 % (w/w) active ingredient and was applied at a rate of 841 g of active ingredient /ha by spreading. Fluopyram in combination with Imidacloprid (Velum total) was used as a Soluble Concentrate (SC) formulation with a concentration of 440 g/l active ingredient in total, thereof 180 g/l Fluopyram and 260 g/l Imidacloprid and these combinations were applied separately at three different rates of 321.5 g of total active ingredient /ha, 450 g of total active ingredient /ha, and 578.7 g of total active ingredient /ha by spraying. The percentage of open bolls was assessed by visual inspection at three times after application.

| No | Active Ingredient | Application Rate (g/ha) | 97 Days after Application BBCH 76 | 104 Days after Application BBCH 77 | 111 Days after Application BBCH 78 |
|---|---|---|---|---|---|
| 1 | UNTREATED | 0 | 0 | 1.3 | 6.3 |
| 2 | Aldicarb | 841 | 12.5 | 17.5 | 30.0 |
| 3 | Fluopyram +Imidacloprid (Velum total) | 321.5 | 2.5 | 3.3 | 7.5 |
| 4 | Fluopyram+Imi dacloprid (Velum total) | 450 | 21.3 | 29.0 | 53.8 |
| 5 | Fluopyram+Imi dacloprid (Velum total) | 578.7 | 25.0 | 37.5 | 58.8 |

## Claims

1. A method for improving earliness in cotton,
wherein an effective amount of Fluopyram, the compound according to formula (I) 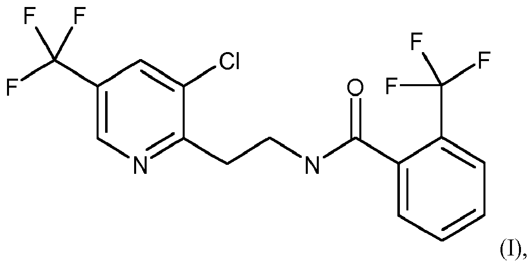 is applied to cotton plants, plant parts thereof, plant propagation material or the soil which the plants are grown or intended to be grown.

2. Method according to Claim 1, wherein a significant increase in open bolls of 2 to 75 % open bolls assessed by visual inspection at the BBCH stages 70 to 80 is observed compared with the untreated plant (0% open bolls).

3. Method according to Claim 2, wherein Fluopyram is applied in combination with at least one nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor.

4. Method according to Claim 3, wherein Fluopyram is applied in combination with Imidacloprid.

5. Method according to any of Claims 1 to 4, wherein Fluopyram is applied at a rate of about 25 g/ha to about 1000 g/ha.

6. Method according to any of Claims 3 to 4, wherein the application rate of total active ingredient is about 10 g/ha to about 1000 g/ha.

7. Method according to any of Claims 1 to 6, wherein Fluopyram as single active ingredient or in combination with at least one insecticide according to any of Claims 3 to 4 is applied at BBCH stages 00 to 09.

8. Method according to any of Claims 1 to 7, wherein Fluopyram as single active ingredient or in combination with at least one insecticide according to any of Claims 3 to 4 is applied in furrow.

9. Method according to any of Claims 1 to 8, wherein Fluopyram as single active ingredient or in combination with at least one insecticide according to Claims 3 to 4 is applied to transgenic cotton.

10. Method according to any of Claims 1 to 9, wherein Fluopyram as single active ingredient or in combination with at least one insecticide according to Claims 3 to 4 is applied to a transgenic cotton plant or seeds thereof comprising a bacillus thuringiensis gene.

11. Use of an effective amount of Fluopyram, the compound according to formula (I)

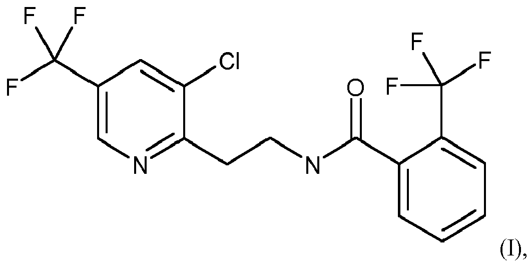

12. Use according to claim 11 wherein Fluopyram is applied to cotton plants, plant parts thereof, plant propagation material or the soil which the plants are grown or intended to be grown.

13. Use according to any of Claims 11 to 12, wherein a significant increase in open bolls of 2 to 75 % open bolls assessed by visual inspection at the BBCH stages 70 to 80 is observed compared with the untreated plant (0% open bolls).

14. Use according to any of Claims 11 to 13, wherein Fluopyram is applied in combination with at least one nicotinic acetylcholine receptor (nAChR) agonist selected from the group consisting of Acetamiprid, Clothianidin, Dinotefuran, Imidacloprid, Nitenpyram, Thiacloprid, Thiamethoxam, Nicotine and Sulfoxafluor.

15. Use according to Claim 14, wherein Fluopyram is applied in combination with Imidacloprid.

16. Use according to any of Claims 11 to 15, wherein Fluopyram is applied at a rate of about 25 g/ha to about 1000 g/ha.

17. Use according to any of Claims 14 to 15, wherein the application rate of total active ingredient is about 10 g/ha to about 1000 g/ha.

18. Use according to any of Claims 11 to 17, wherein Fluopyram as single active ingredient or in combination with at least one insecticide according to any of Claims 3 to 4 is applied at BBCH stages 00 to 09.

19. Use hod according to any of Claims 11 to 18, wherein Fluopyram as single active ingredient or in combination with at least one insecticide according to any of Claims 14 to 15 is applied in furrow.

20. Use according to any of Claims 11 to 19, wherein Fluopyram as single active ingredient or in combination with at least one insecticide according to Claims 14 to 15 is applied to transgenic cotton.

21. Use according to any of Claims 11 to 20, wherein Fluopyram as single active ingredient or in combination with at least one insecticide according to Claims 14 to 15is applied to a transgenic cotton plant or seeds thereof comprising a bacillus thuringiensis gene.
